# EUROPÄISCHE PATENTSCHRIFT

(11) **EP 0 914 575 B1**
(45) Veröffentlichungstag und Bekanntmachung des Hinweises auf die Patenterteilung: **09.04.2003**
(21) Anmeldenummer: 98906837.4
(22) Anmeldetag: 23.01.1998
(51) Int. Cl.: F16H 61/00, F16H 61/12

(54) **HYDRAULIKNOTSTEUERUNG ZUR EINSTELLUNG EINES KONSTANTEN KLEMMVERHÄLTNISSES BEI EINEM STUFENLOS VERSTELLBAREN UMSCHLINGUNGSGETRIEBE**
EMERGENCY HYDRAULIC CONTROL FOR ADJUSTING A CONSTANT CLAMPING FORCE RATIO WITH REGARD TO A CONTINUOUSLY VARIABLE TRANSMISSION
COMMANDE HYDRAULIQUE DE SECURITE POUR L'AJUSTEMENT D'UN RAPPORT CONSTANT DE SERRAGE DANS LE CAS D'UNE TRANSMISSION A VARIATION CONTINUE

(30) Priorität: 20.05.1997 DE 19721027
(43) Veröffentlichungstag der Anmeldung: 12.05.1999
(73) Patentinhaber: ROBERT BOSCH GMBH, 70442 Stuttgart (DE)
(72) Erfinder: SEN, Mehmet-Faith, D-71282 Hemmingen (DE); SPIESS, Ewald, D-71665 Vaihingen (DE); SENGER, Karl-Heinz, D-74369 Löchgau (DE); LUH, Joachim, D-74321 Bietigheim-Bissingen (DE); BÄUERLE, Peter, D-71636 Ludwigsburg (DE)
(86) Internationale Anmeldenummer: DE9800204
(87) Internationale Veröffentlichungsnummer: WO98053226

(56) Entgegenhaltungen:
- DE-A- 4 138 378
- DE-A- 4 340 431
- DE-A- 4 410 311
- DE-A- 19 519 163
- DE-A- 19 609 785

## Beschreibung

### Stand der Technik

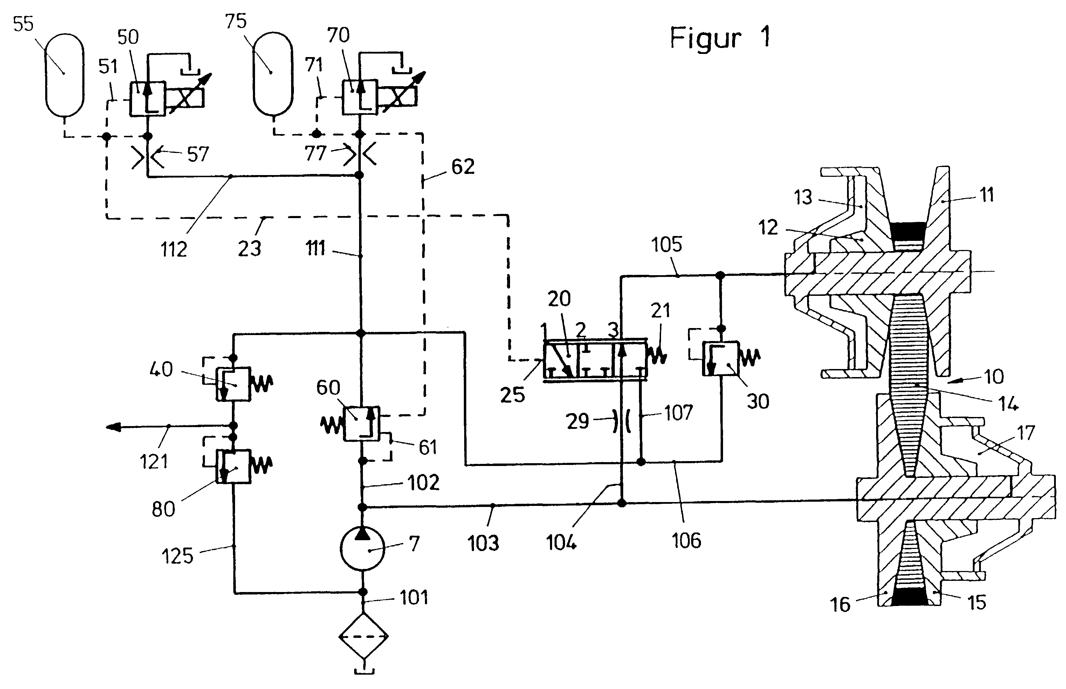

Die Erfindung geht von einer Hydrauliknotsteuerung nach dem Oberbegriff des Hauptanspruchs aus, wie sie in Figur 1 gezeigt ist.

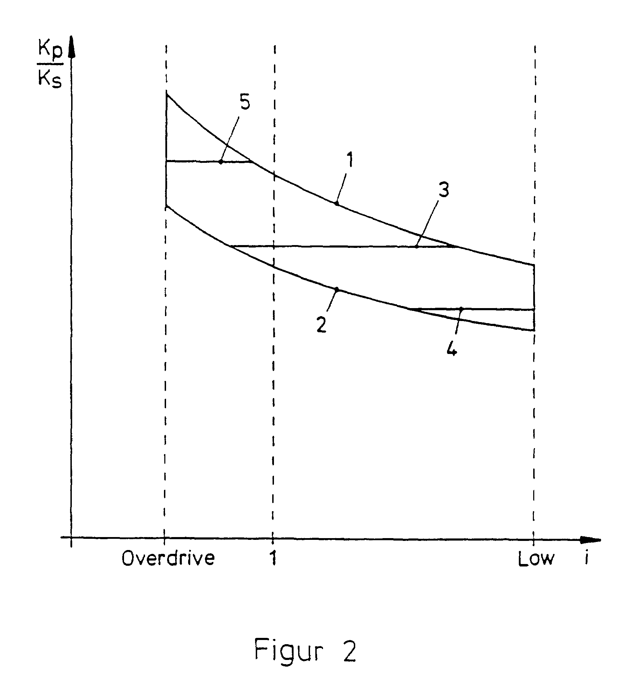

Aus der nicht vorveröffentlichten DE 196 09 785 (siehe die korrespondierende WO 97/34094, die einen Stand der Technik nach Artikel 54(3) und (4) EPC bildet) ist eine ähnliche Hydrauliknotsteuerung für ein elektronisch gesteuertes, kontinuierlich variables Getriebe (continuously variable transmission, CVT) bekannt. Das dort beschriebene CVT-Getriebe, das vorzugsweise in Kraftwagen verwendet wird, weist eine Steuerung für den Notfahrbetrieb auf, die bei einem Ausfall der elektrischen Ansteuerung des Normalfahrbetriebs in eine Schaltstellung mit hohem Übersetzungsverhältnis veranlaßt, um somit günstigere Neustart- und Anfahrbedingungen zu schaffen. Bei dieser Steuerung wird u.a. das Verhältnis von primärer zu sekundärer Klemmkraft zwischen dem Zugmittel und den Kegelscheibenpaaren über einen Zwischenübersetzungsbereich konstant gehalten. In dem Zwischenübersetzungsbereich ändert sich die Übersetzung in Abhängigkeit vom Drehmomentbedarf der Abtriebswelle. Bei hohem Drehmomentbedarf wird eine hohe Übersetzung gewählt, die das Anfahren aus dem Stand ermöglicht, während bei niedrigem Drehmomentbedarf, z.B. wenn ein Schubmoment auftritt, sich eine kleine Übersetzung einstellt. Die hierzu notwendigen Mittel werden in der Beschreibung zu den Figuren 1 und 2 angegeben.

### Vorteile der Erfindung

Die erfindungsgemäße Hydrauliknotsteuerung gemäß Anspruch 1 wird benötigt, um ein stufenlos übersetzendes Umschlingungsgetriebe ohne die Unterstützung einer im Normalfahrbetrieb aktiven elektro-hydraulischen Ansteuerung über den gesamten Übersetzungsbereich benutzen zu können. Mit Hilfe der Hydrauliknotsteuerung soll bei einem Fahrzeugstart eine Anfahrübersetzung im Low-Bereich eingestellt werden, um z.B. ein Anfahren am Berg oder aus einer Tiefgarage heraus zu ermöglichen. Ebenso soll die Notsteuerung bei hohen Fahrgeschwindigkeiten und niedrigem Motordrehmoment eine Übersetzung im "Overdrive"-Bereich einstellen. Wichtig ist hierbei, daß sich während eines Schubbetriebs, z.B. beim Abbremsen des Fahrzeugs, das Übersetzungsverhältnis nicht vollständig bis in den "Overdrive"-Bereich fällt und sich unmittelbar nach einer erneuten anfahr- oder beschleunigungsbedingcen schnellen Drehzahlerhöhung des Fahrzeugmotors in Richtung "Low" verstellt.

Bei der erfindungsgemäßen Hydrauliknotsteuerung wird das Klemmkraftverhältnis abhängig vom geförderten Pumpenvolumenstrom bzw. der Motordrehzahl variiert. Dazu ist in einer offenen Kydraulikschaltung zur Versorgung der jeweiligen Kolbenräume der sekundären und primären Axialverstellungen mindescens ein Drosselventil angeordnet. Die sich am Drosselventil einstellende volumenstromabhängige Druckänderung verändert - unterstützt durch weitere Ventile - den Anpreßdruck im entsprechenden Kegelscheibenpaar. Zur Regelung des Primär- und Sekundärdruckes werden jeweils ein Primär- und Sekundärventil verwendet. Jedes Ventil wird wiederum über je ein elektromagnetisch betätigtes Vorsteuerventil im Notfahrbetrieb öffnendes Vorsteuerventil angesteuert, wobei die Vorsteuerventile über Blendenventile u.a. am Ausgang des Sekundärventils angeschlossen sind. Der Druckmitteldruck im primären Kolbenraum wird zusätzlich durch ein Primärdruckbegrenzungsventil begrenzt. Der Ausgang dieses Druckbegrenzungsventils ist über eine Steuerleitung mit der zwischen dem primären Vorsteuerventil und dem Primärventil liegenden Steuerleitung angeschlossen. Zugleich ist zwischen der Einmündung der am Ausgang des Druckbegrenzungsventils angeordneten Steuerleitung in die vom Vorsteuerventil kommende Steuerleitung und der Abzweigung dieser Steuerleitung aus der Zuleitung zum primärseitigen Vorsteuerventil ein Blendenventil angeordnet.

Diese Hydraulikschaltung reagiert u.a. im Schubbetrieb, also wenn sich das Übersetzungverhältnis in Richtung "Overdrive" bewegt, bei einer kurzen Motordrehzahlerhöhung im Notfahrbetrieb mit einem Primärdruckanstieg bei der der Begrenzungsdruck des Primärdruckbegrenzungsventils überschritten wird. Das sich dadurch in den Steuerleitungen zwischen dem Blendenventil und dem Steuereingang des Primärventils kurzzeitig aufstauende Druckmittel bewegt das Primärventil in eine Rücklaufstellung, bei der der primäre Kolbenraum in den Tank entlastet wird. Hierdurch erhöht sich die Übersetzung des Umschlingungsgetriebes, womit ein erneutes Beschleunigen des Fahrzeugs möglich wird.

Weitere Einzelheiten der Erfindung ergeben sich aus den hier nicht zitierten Unteransprüchen und den Figurenbeschreibungen.

### Zeichnungen

Ein Ausführungsbeispiel der Erfindung ist neben dem Stand der Technik in einer Zeichnung schematisch in Form eines Hydraulikschaltplanes dargestellt und in der nachfolgenden Figurenbeschreibung auch mit Hilfe eines vereinfacht bzw. idealisiert dargestellten Diagramms näher erläutert. Es zeigen
- Figur 1: einen Hydraulikschaltplan für die Einstellung eines vorgewählten Klemmkraftverhältnisses,
- Figur 2: ein Klemmkraftverhältnisdiagramm,
- Figur 3: einen Hydraulikschaltplan wie in Figur 1 mit einem Drosselventil in der zum Primärventil führenden Steuerleitung,
- Figur 4: einen Hydraulikschaltplan wie in Figur 3 mit zwei weiteren Blendenventilen.

### Beschreibung der Ausführungsbeispiele

Figur 1 zeigt einen, dem Stand der Technik entsprechenden Ausschnitt aus einem Hydraulikschaltplan zur Steuerung der Hydrauliköldrücke der an- und abtriebsseitigen Druckzylinder eines stufenlos übersetzenden Umschlingungsgetriebes. Das bekannte Umschlingungsgetriebe (10) umfaßt zwei Kegelscheibenpaare zwischen denen ein Übertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest in einem Teil der Kegelscheiben integriert. Die von diesen Teilen eingeschlossenen Kolbenräume sind auf der Primärseite der Kolbenraum (13) und auf der Sekundärseite der Kolbenraum (17). Sie werden entsprechend der einzustellenden Übersetzung mit dem dafür erforderlichen Arbeitsdruck beaufschlagt. Das primärseitige Kegelscheibenpaar wird beispielsweise vom Fahrzeugmotor angetrieben, während das sekundärseitige Kegelscheibenpaar auf den Antriebsstrang des Fahrzeugs wirkt.

Zur Aufbringung der notwendigen Klemmkräfte an den Scheibenpaaren (11, 12) und (15, 16) versorgt eine beispielsweise vom Fahrzeugmotor angetriebene hydrostatische Pumpe (7) die beiden Kolbenräume (13) und (17) mit Hydrauliköl, wobei in den hier beschriebenen Ausführungen der erforderliche abtriebsseitige Sekundärdruck größer oder gleich dem notwendigen antriebsseitigen Primärdruck ist.

Der sekundärseitige Kolbenraum (17) wird über eine Arbeitsleitung (102) und eine Sekundärleitung (103) ohne Zwischenschaltung eines Ventils mit Druckmittel versorgt. Der Sekundärdruck wird mit Hilfe eines Sekundärventils (60) und eines Vorschaltventils (70) eingestellt. Zwischen beiden Ventilen (60) und (70) befindet sich eine Arbeitsleitung (111). In der Arbeitsleitung (111) ist vor dem Vorschaltventil (70) ein Blendenventil (77) angeordnet.

Das Sekundärventil (60) ist ein fremdgesteuertes Druckbegrenzungsventil. Das Vorschaltventil (70) ist ein elektromagnetisch betätigtes Druckbegrenzungsventil, dessen Ausgang in den Tank entlastet wird. Die Steuerleitung (71) des Vorschaltventils (70) zweigt hinter dem Elendenventil (77) ab. Sie ist zusätzlich an einem Hydrospeicher (75) angeschlossen.

Der Primäröldruck im Kolbenraum (13) wird mit Hilfe eines 3/3-Stetigwegeventils (20) eingestellt. Dieses Primärventil (20), das über eine Arbeitsleitung (104) aus der sekundären Arbeitsleitung (103) versorgt wird, ist über eine Primärdruckleitung (105) an der Kolbenkammer (13) angeschlossen. Das Primärventil (20) weist zum einen linksseitig einen Steueranschiuß (25) und zum anderen rechtsseitig eine mechanische Rückstellfeder (21) auf. In der zum Zuflußanschluß des Ventils (20) führenden Arbeitsleitung (104) sitzt ein Drosselventil (29). Aus der Primärdruckleitung (105) zweigt eine Arbeitsleitung (106) ab. Die Arbeitsleitung (106) führt über zwei Druckbegrenzungsventile (30) und (40) in eine Getriebeschmiermittelleitung (121). In die Arbeitsleitung (106) mündet eine am Abfluß des Primärventils (20) angeschlossene Rücklaufleitung (107). Zwischen dieser Einmündung und der Abzweigung der Rücklaufleitung (106) aus der Primärdruckleitung (105) liegt das Druckbegrenzungsventil (30). Zwischen der Einmündung der Rücklaufleitung (107) und dem Druckbegrenzungsventil (40) schneidet die Arbeitsleitung (106) die Arbeitsleitung (111).

Aus der Arbeitsleitung (111) zweigt eine Arbeitsleitung (112) ab, die in einem elektromagnetisch betätigten Druckbegrenzungsventil (50) mit Tankentlastung endet. Das Druckbegrenzungsventil (50) ist ein Vorschaltventil für das Primärventil (20). Vor dem Ventil (50) ist ein Blendenventil (57) angeordnet. Zwischen dem Blendenventil (57) und dem Zulaufanschluß des Vorschaltventils (50) zweigt die Steuerleitung (51) ab, an der ein Hydrospeicher (55) angeschlossen ist. Im Bereich des Abzweigs ist eine Steuerleitung (23) angeschlossen, die zum Steueranschluß (25) des Primärventils (20) führt.

Zwischen der Getriebeschmiermittelleitung (121) und dem Tank ist eine Tankrücklaufleitung (125) angeordnet. Sie mündet beispielsweise vor der Pumpe (7) in die Arbeitsleitung (101). In der Tankrücklaufleitung (125) sitzt ein Schmierdruckventil (80). Es ist als Druckbegrenzungsventil ausgebildet, das den Schmierdruck nach oben begrenzt.

Beim Ausfall der Ansteuerungselektronik werden die Elektromagnete der Vorsteuerventile (50) und (70) nicht mehr mit Strom versorgt. Vorsteuerventile (50) und (70) öffnen. Der Druck in den Steuerleitungen (62) und (23) fällt ab. In der Folge stellt das Sekundärventil (60) den maximalen Begrenzungsdruck ein, während sich das Primärventil (20) in die Schaltstellung 3 bewegt. Das Ventil (30) in der Arbeitsleitung (106) öffnet beim Überschreiten eines voreingestellten maximalen Primärdrucks. Druckmittel strömt aus der Sekundärleitung (103) über die Arbeitsleitung (104), das Drosselventil (29), das Primärventil (20), die Primärdruckleitung (105), das Primärdruckbegrenzungsventil (30), die Arbeitsleitung (106) zum Druckbegrenzungsventil (40), wo das Druckmittel für die Ansteuerung der Vorschaltventile (50) und (70) zur Verfügung steht.

Bei konstanten Begrenzungsdrücken der Ventile (60) und (30) stellt sich an den Kolbenräumen (13) und (17) ein konstantes Klemmkraftverhältnis Kₚ/Kₛ ein.

Figur 2 enthält ein Diagramm, in dem das Verhältnis zwischen der Klemmkraft Kₚ des Primärzylinders und Klemmkraft Kₛ des Sekundärzylinders über dem Übersetzungsverhältnis i des Umschlingungsgecriebes schematisch aufgetragen ist. Auf der Abszisse des Diagramms ist das Übersetzungsverhältnis nach rechts steigend aufgetragen. Das mit "Low" bezeichnete, maximale Übersetzungsverhältnis wird in der Regel für das Anfahren des Fahrzeugs gewählt, während das mit "Overdrive" bezeichnete, minimale Übersetzungsverhältnis dem längsten Gang entspricht. Die obere, den gesamten Übersetzungsbereich überspannende Kurve 1 gibt die Klemmkraftverhältnisse an, die zur Drehmomentübertragung bei Vollastbetrieb erforderlich sind. Die untere, ebenfalls den gesamten Übersetzungsbereich überspannende Kurve 2 gibt die Klemmkraftverhältnisse für ein zu übertragendes Drehmoment von annähernd Null wieder.

Das sich nach der Hydraulikschaltung gemäß Figur 1 einstellende Klemmkraftverhältnis Kₚ/Kₛ entspricht ungefähr der mittleren, horizontalen Linie 3 in Figur 2. Hiernach ist eine Übersetzungsverstellung zwischen annähernd "Low", z.B. beim Anfahren, und annähernd "Overdrive" möglich, z.B. im Schubbetrieb bei höheren Geschwindigkeiten.

Die Hydraulikschaltung gemäß Figur 1 weist bei niedrigen Motordrehzahlen einen Nachteil auf, der sich u.a. beim Anfahren auswirken kann. Öffnet nach dem Erreichen des vorgegebenen primären Begrenzungsdrucks das Ventil (30), so kann unter Umständen der gesamte von der Pumpe (1) geförderte Volumenstrom über das Drosselventil (29), das Primärventil (20) und das Primärdruckbegrenzungsventil (30) zum Druckbegrenzungsventil (40) geleitet werden, ohne daß das Sekundärventil (60) öffnet. Dadurch wird das Klemmkraftverhältnis von dem Druckabfall an dem Drosselventil (29) und dem Begrenzungsdruck von Ventil (30) bestimmt. Durch das Absenken des Sekundärdruckes steigt das Klemmkraftverhältnis Kₚ/Kₛ an, d.h. die Linie 3 verlagert sich in Richtung der Linie 5. Bei Linie 5 verstellt sich die Getriebeübersetzung im Schubbetrieb nach "Overdrive", und bei Vollast ist nur eine geringfügige Übersetzungsverstellung in Richtung "Low" möglich, was sich beim Anfahren als nachteilig erweist.

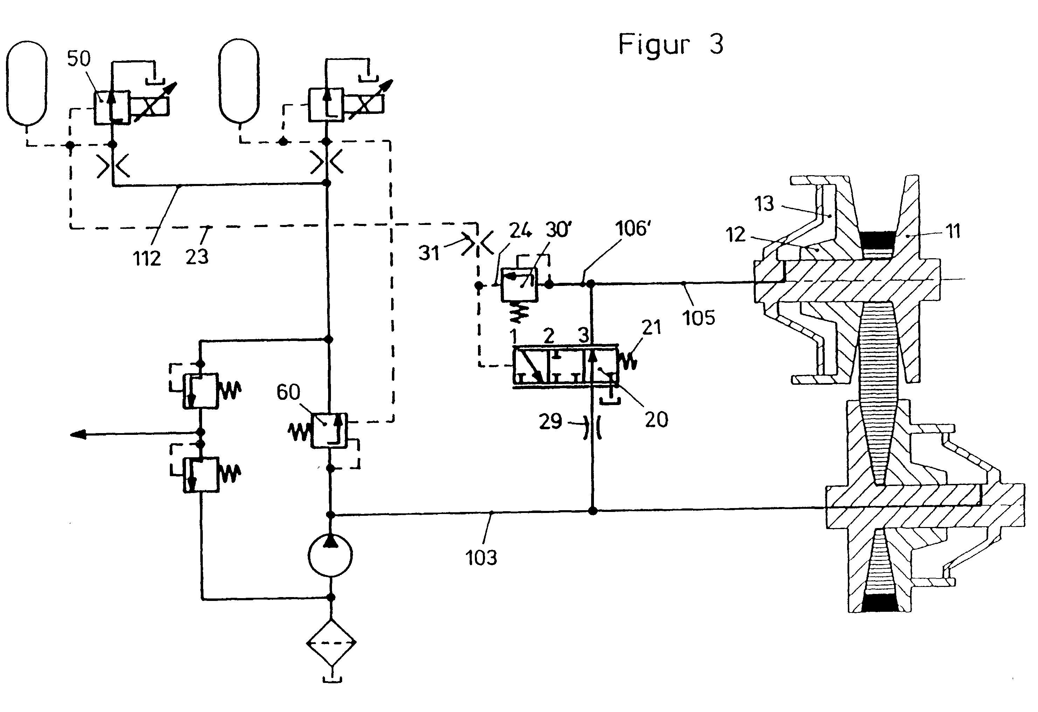

Um ein konstantes Klemmkraftverhältnis auch bei niedrigeren Drehzahlen des Fahrzeugmotors sicherzustellen, ist im Hydraulikschaltplan nach Figur 3 der Ausgang des Primärdruckbegrenzungsventils (30') über eine Steuerleitung (24) mit der zum primären Vorsteuerventil (50) führenden Steuerleitung (23) verbunden. In der Steuerleitung (23) ist zwischen der Einmündung der Steuerleitung (24) und dem Vorsteuerventil (50) ein Blendenventil (31) angeordnet. Zusätzlich ist der Rücklaufanschluß des Primärventils (20) mit dem Tank verbunden.

Übersteigt der Primärdruck im Notfahrbetrieb den Begrenzungsdruck des Ventils (30'), so strömt Druckmittel aus der Primärleitung (105) über das geöffnete Druckbegrenzungsventil (50) in den Tank. Das Druckmittel passiert hierbei die Steuerleitung (106'), das Ventil (30'), die Steuerleitung (24), und die mit dem Blendventil (31) ausgestattete Steuerleitung (23).

Öffnet sich das Primärdruckbegrenzungsventil (30') weit genug, erhöht sich vor dem Blendenventil (31) der Druck in der Leitung (24) und der Leitung (23) zwischen dem Blendenventil (31) und dem Primärventil (20), so daß sich der Schieber des Primärventils (20) gegen die Kraft der Rückstellfeder (21) in die Schaltstellung 1 bewegt. Hierdurch wird die Primärdruckleitung (105) direkt in den Tank entlastet. Der Druck im primären Kolbenraum (13) fällt. Der Abstand zwischen den Kegelscheiben (11) und (12) vergrößert sich. Das Übersetzungsverhältnis des Umschlingungsgetriebes verstellt sich in Richtung "Low".

Da im Hydraulikschaltplan nach Figur 3 nur ein kleiner Druckmittelvolumenstrom aus der Sekundärleitung (103) über das Drosselventil (29) und das Primärventil (20) zur Primärdruckleitung (105) gelangt, öffnet das Sekundärventil (60) bereits bei kleinen Pumpenfördermengen bzw. bei niedrigen Drehzahlen des Fahrzeugmotors. Folglich läßt sich über einen weiten Drehzahlbereich ein konstantes Klemmkraftverhältnis Kₚ/Kₛ entsprechend der horizontalen Linie 3 im Kₚ/Kₛ-Diagramm aus Figur 2 realisieren.

Da hier nur ein kleiner Druckmittelvolumenstrom über das Druckbegrenzungsventil (30') strömt, kann das Ventil im Vergleich zum Druckbegrenzungsventil (30) aus Figur 1 kleiner dimensioniert werden, wodurch die Hydrauliknotsteuerung einen kleineren Bauraum benötigt.

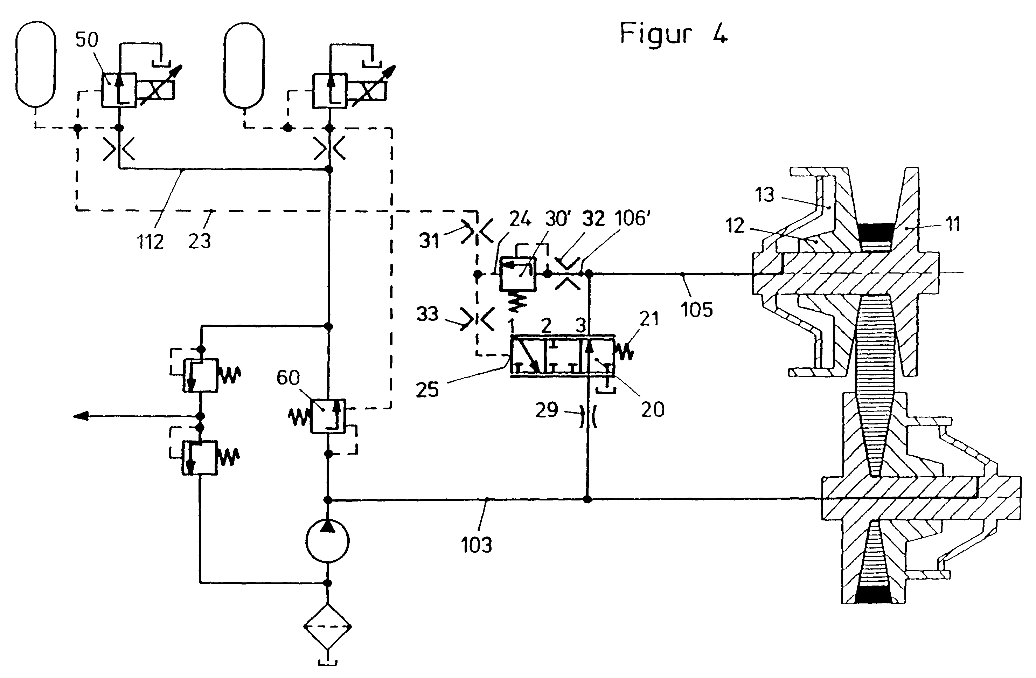

Zur Beeinflussung des am Primärventil (20) anstehenden Steuerdrucks können sowohl in der Leitung (106') als auch in der Steuerleitung (23) zwischen der Einmündung der Steuerleitung (24) und dem Steueranschluß (25) ein oder zwei weitere Drossel- oder Blendenventile (32, 33) angeordnet werden, vgl. Figur 4. Das Blendenventil (32) in der Leitung (106') sitzt vor der ventileigenen Steuerleitung des Primärdruckbegrenzungsventils (30').

## Patentansprüche

1. Hydrauliknotsteuerung für eine übersetzungsabhängige Änderung der Hydrauliköldrücke in einer ersten und einer zweiten hydraulischen Kegelscheibenaxialverstellung eines stufenlosen Umschlingungsgetriebes (10)
- mit einer Pumpe (7), die zumindest den Kolbenraum (17) der zweiten Axialverstellung direkt versorgt,
- mit mindestens einem den dortigen Öldruck begrenzenden Sekundärventil (60),
- mit einem elektromagnetisch betätigten Druckbegrenzungsventil (70), das dem Sekundärventil (60) nachgeschaltet ist und dieses fernsteuert, wobei in der Zuleitung des Ventils (70) ein Blendenventil (77) angeordnet ist und nach dem Blendenventil (77) eine erste Steuerleitung (62) zur Fernsteuerung des Sekundärventils (60) abzweigt,
- mit einem aus der Zuleitung des Kolbenraumes (17) der zweiten Axialverstellung gespeisten Stetigwegeventil (20), über das der Kolbenraum (13) der ersten Axialverstellung mit Druckmittel versorgt wird,
- mit einem zwischen der Zuleitung des Kolbenraumes (17) der zweiten Axialverstellung und dem Stetigwegeventil (20) angeordneten Drosselventil (29),
- mit einem elektromagnetisch betätigten Druckbegrenzungsventil (50), das dem Sekundärventil (60) nachgeschaltet ist und das Stetigwegeventil (20) hydraulisch steuert, wobei in der Zuleitung des Ventils (50) ein Blendenventil (57) angeordnet ist und nach dem Blendenventil (57) eine zweite Steuerleitung (23) zur Steuerung des Stetigwegeventils (20) abzweigt und
- mit einem Druckbegrenzungsventil (30, 30'), das den Druck in der Zuleitung des Kolbenraumes (13) den ersten Axialverstellung begrenzt,
**dadurch gekennzeichnet,**
- **daß** der Ausgang des Ventils (30') über eine dritte Steuerleitung (24) mit der zweiten Steuerleitung (23) verbunden ist und
- **daß** zwischen der Einmündung der dritten Steuerleitung (24) in die zweite Steuerleitung (23) und der Abzweigung der zweiten Steuerleitung (23) aus der Zuleitung (112) zum Druckbegrenzungsventil (50) ein Blendenventil (31) angeordnet ist.

2. Hydrauliknotsteuerung gemäß Anspruch 1, **dadurch gekennzeichnet, daß** das Stetigwegeventil (20) ein 3/3-Wegeventil ist, dessen Schieber zwischen einer Rückstellfeder (21) und einer hydraulischen Betätigung mit einem Steueranschluß (25) eingespannt ist und eine Sperrmittelstellung aufweist.

3. Hydrauliknotsteuerung gemäß Anspruch 1, **dadurch gekennzeichnet, daß** die Druckbegrenzungsventile (50) und (70) im unbestromten Zustand geöffnet sind.

4. Hydrauliknotsteuerung gemäß Anspruch 1, **dadurch gekennzeichnet, daß** an jeder Steuerleitung (51, 71) der Druckbegrenzungsventile (50, 70) ein Hydrospeicher (55, 75) angeschlossen ist.

5. Hydrauliknotsteuerung gemäß Anspruch 1, **dadurch gekennzeichnet, daß** der Druckmitteldruck in der Zuleitung zu den Druckbegrenzungsventilen (50) und (70) mittels eines Hilfsdruckventils (40) begrenzt wird.

6. Hydrauliknotsteuerung gemäß Anspruch 5, **dadurch gekennzeichnet, daß** dem Hilfsdruckventil (40) ein Druckbegrenzungsventil (80) als Schmierdruckventil nachgeschaltet ist, vor dessen Eingang eine Schmiermittelleitung (121) abzweigt und dessen Ausgang in den Tank entlastet oder dem Sauganschluß der Pumpe (7) zugeführt wird.

7. Hydrauliknotsteuerung gemäß Anspruch 1, **dadurch gekennzeichnet, daß** die Federraten von zumindest einem Teil der Rückstellfedern der federbelasteten Ventile (20, 30, 40, 60, 80) mechanisch oder elektrisch verstellbar sind.

8. Hydrauliknotsteuerung gemäß Anspruch 1, **dadurch gekennzeichnet, daß** sich in der Arbeitsleitung (106') mindestens ein Blendenventil (32) befindet.

9. Hydrauliknotsteuerung gemäß Anspruch 1, **dadurch gekennzeichnet, daß** in der zweiten Steuerleitung (23)zwischen der Einmündung der dritten Steuerleitung (24) und dem Steueranschluß (25) mindestens ein Blendenventil (33) angeordnet ist.

## Claims

1. Emergency hydraulic control for a ratio-dependent change of the hydraulic oil pressures in a first and a second hydraulic axial conical-disc adjustment of a continuously variable wrap-around transmission (10),
- with a pump (7) which directly supplies at least the piston space (17) of the second axial adjustment,
- with at least one secondary valve (60) limiting the oil pressure there,
- with an electromagnetically actuated pressure-limiting valve (70) which follows the secondary valve (60) and remotely controls the latter, a diaphragm valve (77) being arranged in the feed line of the valve (70) and a first control line (62) for the remote control of the secondary valve (60) branching off downstream of the diaphragm valve (77),
- with a continuous directional valve (20) which is supplied from the feed line of the piston space (17) of the second axial adjustment and via which the piston space (13) of the first axial adjustment is supplied with pressure medium,
- with a throttle valve (29) arranged between the feed line of the piston space (17) of the second axial adjustment and the continuous directional valve (20),
- with an electromagnetically actuated pressure-limiting valve (50) which follows the secondary valve (60) and controls the continuous directional valve (20) hydraulically, a diaphragm valve (57) being arranged in the feed line of the valve (50), and a second control line (23) for controlling the continuous directional valve (20) branching off downstream of the diaphragm valve (57), and
- with a pressure-limiting valve (30, 30') which limits the pressure in the feed line of the piston space (13) of the first axial adjustment,
**characterized**
- **in that** the outlet of the valve (30') is connected to the second control line (23) via a third control line (24), and
- **in that** a diaphragm valve (31) is arranged between the issue of the third control line (24) into the second control line (23) and the branch-off of the second control line (23) from the feed line (112) to the pressure-limiting valve (50).

2. Emergency hydraulic control according to Claim 1, **characterized in that** the continuous directional valve (20) is a 3/3-way valve, the slide of which is restrained between a return spring (21) and a hydraulic actuation with a control connection (25) and has a blocking middle position.

3. Emergency hydraulic control according to Claim 1, **characterized in that** the pressure-limiting valves (50) and (70) are open in the currentless state.

4. Emergency hydraulic control according to Claim 1, **characterized in that** a hydraulic accumulator (55, 75) is connected to each control line (51, 71) of the pressure-limiting valves (50, 70).

5. Emergency hydraulic control according to Claim 1, **characterized in that** the pressure-medium pressure in the feed line to the pressure-limiting valves (50) and (70) is limited by means of an auxiliary-pressure valve (40).

6. Emergency hydraulic control according to Claim 5, **characterized in that** the auxiliary-pressure valve (40) is followed by a pressure-limiting valve (80) as a lubricating-pressure valve, upstream of the inlet of which a lubricant line (121) branches off and the outlet of which is relieved into the tank or is delivered to the suction connection of the pump (7).

7. Emergency hydraulic control according to Claim 1, **characterized in that** the spring constants of at least some of the return springs of the spring-loaded valves (20, 30, 40, 60, 80) are mechanically or electrically adjustable.

8. Emergency hydraulic control according to Claim 1, **characterized in that** at least one diaphragm valve (32) is located in the working line (106').

9. Emergency hydraulic control according to Claim 1, **characterized in that** at least one diaphragm valve (33) is arranged in the second control line (23) between the issue of the third control line (24) and the control connection (25).

## Revendications

1. Commande hydraulique de sécurité pour une modification, dépendante de la transmission, des pressions d'huile hydraulique dans une première et une deuxième mise au point axiale de poulie à cônes hydraulique d'une transmission à variation continue (10)
- avec une pompe (7) qui alimente directement au moins l'espace de piston (17) de la deuxième mise au point axiale,
- avec au moins une soupape secondaire (60) limitant la pression d'huile qui s'y trouve,
- avec une soupape de limitation de pression (70) actionnée par électromagnétisme qui est connectée en aval de la soupape secondaire (60) et qui la commande à distance, une soupape à diaphragme (77) étant placée dans la conduite d'amenée de la soupape (70) et une première conduite de commande (62) se ramifiant après la soupape à diaphragme (77) afin de commander à distance la soupape secondaire (60),
- avec une soupape à course progressive (20), alimentée à partir de la conduite d'amenée de l'espace de piston (17) de la deuxième mise au point axiale, par l'intermédiaire de laquelle l'espace de piston (13) de la première mise au point axiale est alimenté en moyen de pression,
- avec une soupape d'étranglement (29) placée entre la conduite d'amenée de l'espace de piston (17) de la deuxième mise au point axiale et la soupape à course progressive (20),
- avec une soupape de limitation de pression (50) actionnée par électromagnétisme qui est connectée en aval de la soupape secondaire (60) et qui commande hydrauliquement la soupape à course progressive (20), une soupape à diaphragme (57) étant placée dans la conduite d'amenée de la soupape (50) et une deuxième conduite de commande (23) se ramifiant après la soupape à diaphragme (57) afin de commander la soupape à course progressive (20) et
- avec une soupape de limitation de pression (30, 30') qui limite la pression dans la conduite d'amenée de l'espace de piston (13) de la première mise au point axiale,
**caractérisée en ce que**
- la sortie de la soupape (30') est liée à la deuxième conduite de commande (33) par l'intermédiaire d'une troisième conduite de commande (24), et
- une soupape à diaphragme (31) est placée entre la jonction de la troisième conduite de commande (24) dans la deuxième conduite de commande (23) et la dérivation de la deuxième conduite de commande (33) provenant de la conduite d'amenée (112) jusqu'à la soupape de limitation de pression (50).

2. Commande hydraulique de sécurité selon la revendication 1,
**caractérisée en ce que**
la soupape à course progressive (20) est une soupape à 3/3 voies dont la vanne d'arrêt entre un ressort de rappel (21) et un actionnement hydraulique est tendue avec un raccordement de commande (25) et présente une position médiane de barrage.

3. Commande hydraulique de sécurité selon la revendication 1,
**caractérisée en ce que**
les soupapes de limitation de pression (50) et (70) sont ouvertes dans l'état où aucun courant ne passe.

4. Commande hydraulique de sécurité selon la revendication 1,
**caractérisée en ce qu'**
un accumulateur hydraulique (55, 75) est raccordé à chaque conduite de commande (51, 71) des soupapes de limitation de pression (50, 70).

5. Commande hydraulique de sécurité selon la revendication 1,
**caractérisée en ce que**
la pression du moyen de pression dans la conduite d'amenée vers les soupapes de limitation de pression (50) et (70) est limitée à l'aide d'une soupape de pression auxiliaire (40).

6. Commande hydraulique de sécurité selon la revendication 5,
**caractérisée en ce qu'**
en aval de la soupape de pression auxiliaire (40) est connectée une soupape de limitation de pression (80) en tant que soupape de pression de lubrifiant avant l'entrée de laquelle se ramifie une conduite de lubrifiant (121) et dont la sortie est déchargée dans le réservoir ou est amenée au raccordement aspirant de la pompe (7).

7. Commande hydraulique de sécurité selon la revendication 1,
**caractérisée en ce que**
les taux de ressort d'au moins une partie des ressorts de rappel des soupapes (20, 30, 40, 60, 80) équilibrées par ressort peuvent être réglés mécaniquement ou électriquement.

8. Commande hydraulique de sécurité selon la revendication 1,
**caractérisée en ce qu'**
il y a au moins une soupape à diaphragme (32) dans la conduite opératoire (106').

9. Commande hydraulique de sécurité selon la revendication 1,
**caractérisée en ce qu'**
il y a au moins une soupape à diaphragme (33) dans la deuxième conduite de commande (23) entre la jonction de la troisième conduite de commande (24) et le raccordement de commande (25).
